# EUROPÄISCHE PATENTANMELDUNG

(11) **EP 0 802 437 A1**
(43) Veröffentlichungstag der Anmeldung: **22.10.1997**
(21) Anmeldenummer: 97105937.3
(22) Anmeldetag: 10.04.1997
(51) Int. Cl.: G02B 7/182, B23K 26/06

(54) **Drehspiegelanordnung zur Fokussierung eines einfallenden Lichtstrahls und/oder zur Änderung der Fokuslage eines bereits fokussierten Lichtstrahls, insbesondere Laserstrahls**

(30) Priorität: 17.04.1996 DE 29606966 U
(71) Anmelder: Sick AG, 79183 Waldkirch, Breisgau (DE)
(72) Erfinder: Hippenmeyer, Heinrich, 79348 Freiamt (DE); Anselment, Christoph, 79183 Waldkirch (DE)
(74) Vertreter: Finsterwald, Martin

(57) **Zusammenfassung**

Die Erfindung betrifft eine Drehspiegelanordnung zur Fokussierung eines einfallenden Lichtstrahls und/oder zur Änderung der Fokuslage eines bereits fokussierten Lichtstrahls, insbesondere Laserstrahls, bei der mehrere Umlenkspiegel unterschiedlicher Brennweite auf einer Seite einer Grundplatte befestigt sind, die an einer auf der gegenüberliegenden Seite angeordneten stationären Rastplatte drehbar gelagert und in verschiedenen Drehstellungen mit dieser verrastbar ist, wobei in einer jeweiligen Raststellung ein betreffender Umlenkspiegel in den Strahlengang des einfallenden Lichstrahls verschwenkt ist, die Grundplatte in Richtung der Drehachse verschiebbar an der Rastplatte gelagert und durch Federkraft gegen diese gehalten ist und die Grundplatte durch ein Dreipunktauflager an der Rastplatte abgestützt ist, das insbesondere drei an der Grundplatte oder der Rastplatte angeordnete, auf einem zur Drehachse konzentrischen Kreis liegende kugelsegmentförmige Noppen umfaßt, die mit einer Kegelbohrung, einer keilförmigen Nut bzw. einem tiefer gelegenen Abschnitt der Rastplatte bzw. der Grundplatte zusammenwirken, um die Grundplatte in der jeweiligen Raststellung eindeutig bestimmt und reproduzierbar zu fixieren.

## Beschreibung

Die Erfindung betrifft eine Drehspiegelanordnung zur Fokussierung eines einfallenden Lichtstrahls und/oder zur Änderung der Fokuslage eines bereits fokussierten Lichtstrahls, insbesondere Laserstrahls.

In vielen praktischen Anwendungsfällen ist es erwünscht, den Fokus insbesondere eines Laserstrahls verstellen zu können.

Ziel der Erfindung ist es, eine Drehspiegelanordnung der eingangs genannten Art zu schaffen, mit der eine solche Fokusverstellung auf einfache und zuverlässige Weise möglich ist.

Die Aufgabe wird nach der Erfindung dadurch gelöst, daß mehrere Umlenkspiegel unterschiedlicher Brennweite auf einer Seite einer Grundplatte befestigt sind, die an einer auf der gegenüberliegenden Seite angeordneten stationären Rastplatte drehbar gelagert und in verschiedenen Drehstellungen mit dieser verrastbar ist, wobei in einer jeweiligen Raststellung ein betreffender Umlenkspiegel in den Strahlengang des einfallenden Lichstrahls verschwenkt ist, daß die Grundplatte in Richtung der Drehachse verschiebbar an der Rastplatte gelagert und durch Federkraft gegen diese gehalten ist und daß die Grundplatte durch ein Dreipunktauflager an der Rastplatte abgestützt ist, das insbesondere drei an der Grundplatte oder der Rastplatte angeordnete, auf einem zur Drehachse konzentrischen Kreis liegende kugelsegmentförmige Noppen umfaßt, die mit einer Kegelbohrung, einer keilförmigen Nut bzw. einem tiefer gelegenen Abschnitt der Rastplatte bzw. der Grundplatte zusammenwirken, um die Grundplatte in der jeweiligen Raststellung eindeutig bestimmt und reproduzierbar zu fixieren.

Demnach wird der jeweils gewünschte Fokus dadurch eingestellt, daß die als Spiegelträger dienende Grundplatte bis zum Erreichen der jeweiligen Rastposition gedreht wird, in der der die betreffende Brennweite aufweisende Umlenkspiegel in den Strahlengang des einfallenden Lichtstrahls verschwenkt ist. Die genaue Positionierung und Ausrichtung des jeweiligen Umlenkspiegels ist durch die Dreipunktlagerung der Grundplatte gewährleistet, durch die diese bezüglich der Rastplatte in der jeweiligen Rastposition fixiert ist.

In einer solchen jeweiligen Rastposition werden die an der Grundplatte oder der Rastplatte vorgesehenen kugelsegmentförmigen Noppen aufgrund der Federkraft in die Kegelbohrung und die keilförmige Nut bzw. gegen den tiefer gelegenen Abschnitt der Rastplatte bzw. der Grundplatte gedrückt. Beim Einstellen der jeweiligen Rastposition wird durch die einen jeweiligen kugelsegmentförmigen Noppen aufnehmende Kegelbohrung ein Drehpunkt definiert, um den die Grundplatte verschwenkbar ist, bis ein weiterer kugelsegmentförmiger Noppen in die keilförmige Nut eingreift, wodurch die Drehlage der Grundplatte bezüglich der Rastplatte definiert ist. Die Ebene, in der die Grundplatte zu liegen kommt, ist dadurch definiert, daß die Grundplatte über den dritten kugelsegmentförmigen Noppen schließlich auch an dem tiefer gelegenen Abschnitt der Rastplatte anliegt bzw. bei umgekehrter Anordnung von Noppen und tiefer gelegenem Abschnitt die Grundplatte mit ihrem tiefer gelegten Abschnitt an dem Noppen zu Anlage kommt. In der erreichten Rastposition wird die Grundplatte dann durch die Federkraft gehalten. Somit ist insbesondere auch bei einer schwimmenden Lagerung der Grundplatte stets eine genaue Positionierung und Ausrichtung der Spiegel gewährleistet. Die jeweiligen Positionen und Einstellungen der Umlenkspiegel sind somit jederzeit reproduzierbar.

Mit der stationären Rastplatte kann eine Leiterplatte fest verbunden sein. Gegen diese Leiterplatte ist vorzugsweise eine mit der Grundplatte drehbare Kontaktfeder gehalten, um ein für die jeweilige Raststellung der Grundplatte repräsentatives Signal abgreifen zu können.

Gemäß einer bevorzugten Ausführungsvariante sind die Umlenkspiegel für eine Justierung im Strahlengang des Lichtstrahles in ihrer Lage bezüglich der Grundplatte verstellbar. Dazu sind die Umlenkspiegel vorteilhafterweise jeweils über ein biegbares Halteblech aus vorzugsweise weichem Material wie insbesondere Aluminium an der Grundplatte befestigt, wobei sie in der jeweils eingestellten Lage durch eine abnehmbare Fixierplatte festlegbar sind.

In den Unteransprüchen sind weitere vorteilhafte Ausführungsvarianten der erfindungsgemäßen Spiegelanordnung angegeben.

Die Erfindung wird im folgenden anhand eines Ausführungsbeispiels unter Bezugnahme auf die Zeichnung näher erläutert. In dieser zeigen:
- Figur 1: eine schematische, teilweise geschnittene Darstellung einer Drehspiegelanordnung zur Fokussierung eines einfallenden Laserstrahls,
- Figur 2: eine Draufsicht der in Figur 1 gezeigten Drehspiegelanordnung in Richtung des Pfeils F der Figur 1,
- Figur 3: eine Figur 2 entsprechende Draufsicht auf die Rastplatte bei abgenommener Grundplatte,
- Figur 4: einen Schnitt durch den die kegelstumpfartige Bohrung aufweisenden Bereich der Rastplatte entlang der Linie A-B der Figur 3,
- Figur 5: einen Schnitt durch den die Kegelbohrung aufweisenden Bereich der Rastplatte entlang der Linie C-D der Figur 3, und
- Figur 6: einen Schnitt durch den die keilförmige Nut aufweisenden Bereich der Rastplatte entlang der Linie E-F der Figur 3.

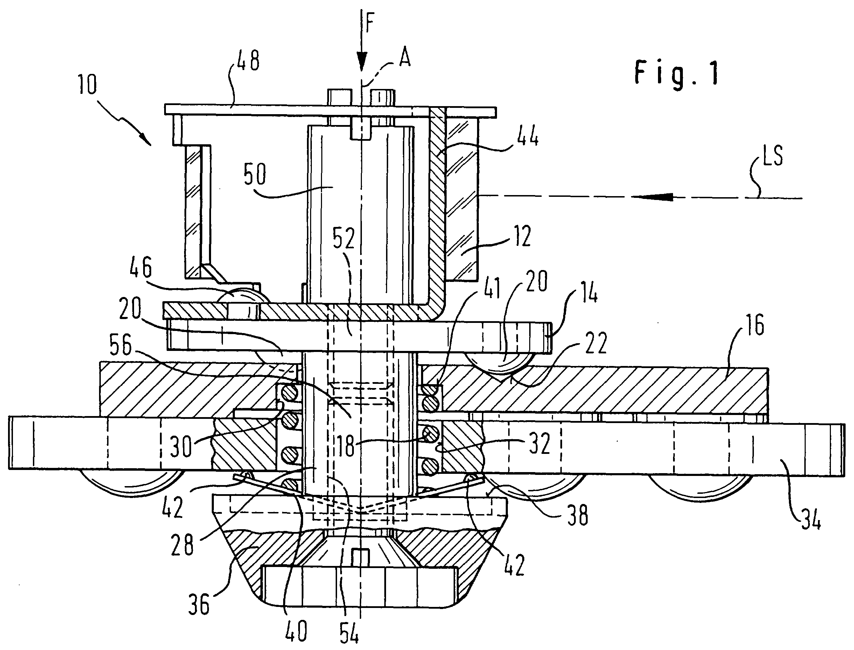

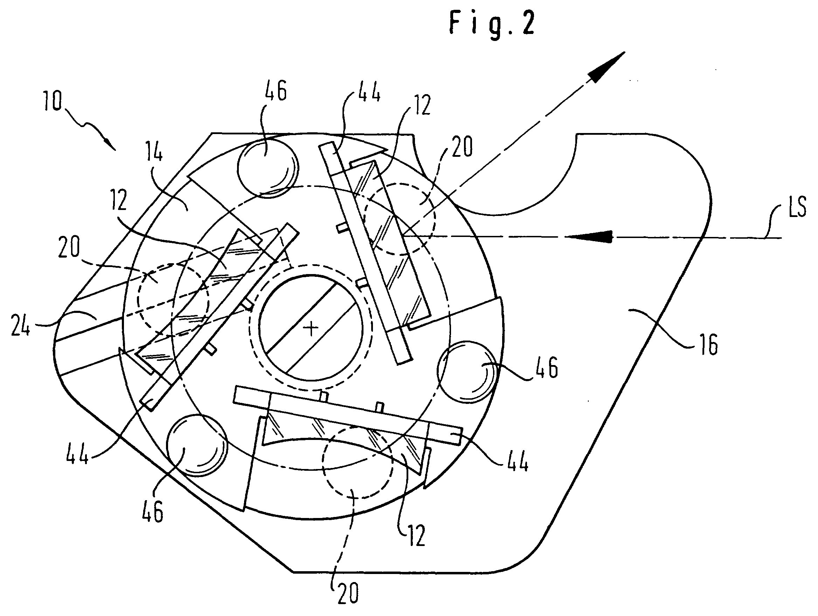

In den Figuren 1 und 2 ist eine Ausführungsvariante einer Drehspiegelanordnung 10 zur Fokussierung eines einfallenden Lichstrahls, hier eines Laserstrahls LS, dargestellt.

Diese Drehspiegelanordnung 10 umfaßt drei Umlenkspiegel 12 unterschiedlicher Brennweite, die auf einer Seite einer Grundplatte 14 befestigt sind. Die Grundplatte 14 ist an einer auf der gegenüberliegenden Seite angeordneten stationären Rastplatte 16 drehbar gelagert und in drei verschiedenen Drehstellungen mit dieser verrastbar. In einer jeweiligen Raststellung der Grundplatte 14 ist ein betreffender Umlenkspiegel 12 in den Strahlengang des einfallenden Laserstrahls LS verschwenkt.

Die Grundplatte 14 ist in Richtung der Drehachse A verschiebbar an der Rastplatte 16 gelagert und durch die Kraft einer Druckfeder 18 gegen diese gehalten. Dabei ist die Grundplatte 14 durch ein Dreipunktauflager an der Rastplatte 16 abgestützt. Dieses Dreipunktauflager umfaßt drei an der Grundplatte 14 angeordnete, auf einem zur Drehachse A konzentrischen Kreis liegende und um jeweils 120° gegeneinander versetzte kugelsegmentförmige Noppen 20.

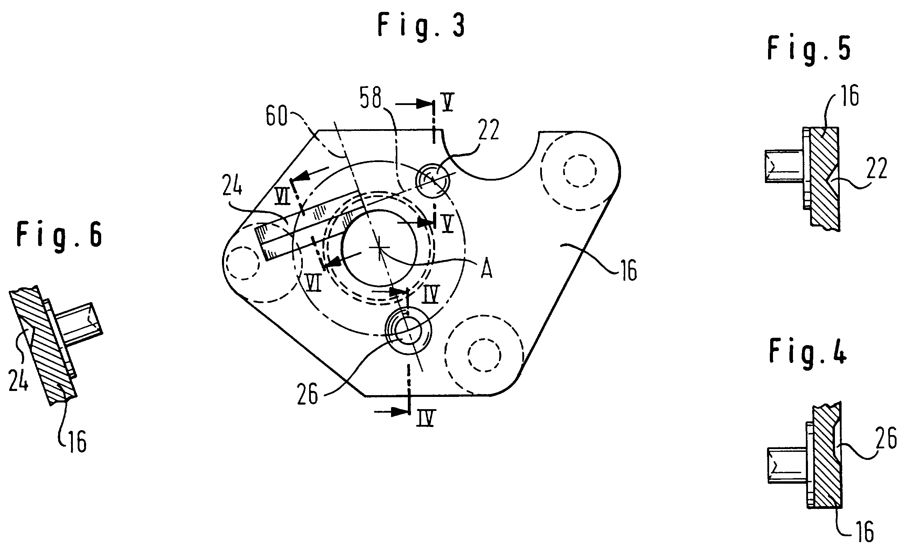

Diese drei kugelsegmentförmigen Noppen 20 wirken mit einer Kegelbohrung 22, einer keilförmigen Nut 24 bzw. einer einen tiefer gelegenen Abschnitt bildenden kegelstumpfartigen Bohrung 26 der Rastplatte 16 zusammen (vgl. insbesondere auch Figuren 3 bis 6), wodurch die Grundplatte 14 in der jeweiligen Raststellung fixiert wird.

Wie am besten anhand der Figur 1 zu erkennen ist, ist die Grundplatte 14 mit einem Drehzapfen 28 versehen, der sich durch eine gestufte Durchgangsöffnung 30 der Rastplatte 16 sowie eine dazu koaxiale Durchgangsöffnung 32 einer fest mit der Rastplatte 16 verbundenen Leiterplatte 34 hindurcherstreckt.

Am freien Ende des Drehzapfens 28 ist lösbar ein insbesondere zur manuellen Betätigung bestimmter Drehknopf 36 befestigt, der durch seine der Leiterplatte 34 zugewandte Stirnfläche einen Anschlag 38 bildet, der von der Druckfeder 18 beaufschlagt wird, die zwischen diesem Anschlag 38 und der Rastplatte 16 angeordnet ist. Hierbei ist die Druckfeder 18 auf den Drehzapfen 28 aufgesetzt, wobei sie sich mit ihrem rastplattenseitigen Ende an einer Ringstufe 41 der gestuft ausgebildeten Durchgangsöffnung 30 der Rastplatte 16 abstützt.

Wie anhand von Figur 1 zu erkennen ist, kann der Außendurchmesser des Drehzapfens 28 kleiner als der kleinere Durchmesser des oberen Abschnitts der gestuften Bohrung 30 der Rastplatte 16 sein. Durch das Dreipunktauflager wird dennoch stets eine genau definierte Position und Ausrichtung der die Umlenkspiegel 12 tragenden Grundplatte 14 erzielt.

Am Drehknopf 36 ist eine Kontaktfeder 40 drehfest gelagert, die über endseitige Kontakte 42 gegen die von der Rastplatte 16 abgewandte Seite der Leiterplatte 34 gehalten ist um, ein für die jeweilige Raststellung der Grundplatte 14 repräsentatives Signal abzugreifen. Dazu ist die Leiterplatte auf der betreffenden Seite entsprechend kontaktiert.

Um die Umlenkspiegel 12 zur jeweiligen Justierung im Strahlengang des Laserstrahls LS in ihrer Lage bezüglich der Grundplatte 14 verstellen zu können, sind diese Umlenkspiegel 12 jeweils über ein biegbares Halteblech 44 an der Grundplatte 14 befestigt. Im vorliegenden Fall ist ein einteiliges, über Nieten 46 an der Grundplatte 14 befestigtes Blechstück vorgesehen, das entsprechend ausgeschnittene, im wesentlichen um 90° umgebogene, die Haltebleche 44 bildende Abschnitte umfaßt.

Die Haltebleche 44 bzw. das diese umfassende einteilige Blechstück besteht im vorliegenden Fall aus einem weichen Material wie insbesondere Aluminium. Eine jeweilige Einstellung bzw. Justierung der Umlenkspiegel 12 erfolgt demnach durch ein entsprechendes Verbiegen der betreffenden Haltebleche 44. In der jeweils eingestellten Lage sind die Umlenkspiegel 12 dann durch eine abnehmbare Fixierplatte 48 (vgl. Figur 1) festlegbar. Gemäß Figur 1 kann diese Fixierplatte 48 an einem Wellenabschnitt 50 befestigt sein, der einen beispielsweise als Mehrkant ausgebildeten Zapfen 52 aufweist, der in eine entsprechende Durchgangsöffnung 54 in der Grundplatte 14 und dem Drehzapfen 28 eingreift.

Zudem ist auch der Drehknopf 36 mit einem solchen Lagerzapfen 56 versehen. Dieser dem Drehknopf 36 zugeordnete, beispielsweise wiederum als Mehrkant ausgebildete Lagerzapfen 36 greift von der anderen Seite her in die entsprechend ausgebildete Ausnehmung 54 ein. Damit sind der Wellenabschnitt 50 sowie der Drehknopf 36 drehfest mit der Grundplatte 14 verbunden.

Wie am besten anhand der Figur 2 zu erkennen ist, besitzen die jeweils um 120° gegeneinander versetzten kugelsegmentförmigen Noppen 20 gleiche Abmessungen.

Wie sich insbesondere aus der Figur 3 ergibt, erstreckt sich die keilförmige Nut 24 entlang einer zur Ebene der Rastplatte 16 parallelen Geraden 58, die durch den Mittelpunkt des Eintrittsquerschnitts der Kegelbohrung 22 verläuft und im rechten Winkel eine weitere zur Ebene der Rastplatte 16 parallele Gerade 60 schneidet, die durch den Mittelpunkt des Eintrittsquerschnitts der kegelstumpfartigen Bohrung 26 und die Drehachse A verläuft.

Wie anhand der Figuren 4 bis 6 zu erkennen ist, besitzen die Kegelbohrung 22 und die keilförmige Nut 24 eine gleiche Tiefe. Zudem weisen die Flanken der keilförmigen Nut 24 eine gleiche Steilheit wie die Umfangswand der Kegelbohrung auf.

Der Eintrittsquerschnitt der den tiefergelegenen Abschnitt bildenden kegelstumpfartigen Bohrung 26 ist größer als der der Kegelbohrung 22. Ein jeweiliger kugelsegmentförmiger Noppen 20 liegt am Boden der kegelstumpfartigen Bohrung 26 an, so daß der tiefergelegene Abschnitt durch den Boden dieser kegelstumpfartigen Bohrung 26 gebildet wird. Die bis zu dem Boden reichende Tiefe ist etwas geringer als die Tiefe der Kegelbohrung 22 sowie der kegelförmigen Nut. Er ist jedoch so tief gelegt, daß die Grundplatte 14 in einer jeweiligen Raststellung in einer genau definierten Ebene und vorzugweise parallel zur Rastplatte 16 ausgerichtet ist.

Die Umfangswand der kegelstumpfartigen Bohrung 26 besitzt eine gleiche Steilheit wie die Flanken der keilförmigen Nut 26 bzw. die Umfangswand der Kegelbohrung 22.

Beim Verdrehen der Grundplatte 14 in eine jeweilige Raststellung wird durch die Kegelbohrung 22 nach dem Eingreifen eines jeweiligen kugelsegmentförmigen Noppens 20 bei angenommen schwimmender Lagerung zunächst ein Drehpunkt definiert, um den die Grundplatte 14 in einer zur Rastplatte 16 im wesentlichen parallelen Ebene verschwenkbar ist. Nachdem ein jeweiliger weiterer Noppen 20 in die keilförmige Nut 24 eingreift, ist die Drehlage der Grundplatte 14 bestimmt. Nachdem diese Grundplatte 14 schließlich über den dritten kugelsegmentförmigen Noppen 20 auch am den tiefer gelegenen Abschnitt bildenden Boden der kegelstumpfartigen Bohrung 26 der Rastplatte 16 anliegt, ist die Grundplatte 14 auch in einer genau definierten Ebene ausgerichtet, die vorzugsweise parallel zur Ebene der Rastplatte ist.

In der jeweiligen Raststellung wird die Grundplatte 14 durch die Druckfeder 18 gehalten, durch die die Grundplatte 14 gegen die Rastplatte 10 gezogen wird. In einer jeweiligen Rastposition können die betreffenden Umlenkspiegel 12 durch entsprechendes Verbiegen der Haltebleche 44 bei einfallendem Laserstrahl LS justiert werden. Anschließend werden die Umlenkspiegel 12 durch Aufsetzen der Fixierplatte 48 festgelegt.

Fertigungstolzeranzen können somit problemlos eliminiert werden. Dadurch, daß die als Spiegelträger diendende Grundplatte 14 in der jeweiligen Raststellung durch die Dreipunktauflage bezüglich der Rastplatte 22 fixiert ist, lassen sich selbst bei einer schwimmenden Lagerung der Grundplatte 14 sämtliche zuvor vorgenommenen Einstellungen der Umlenkspiegel 12 problemlos reproduzieren. Hierzu ist lediglich die Grundplatte 14 in die jeweilige Rastposition zu drehen, in der der die gewünschte Brennweite aufweisende Umlenkspiegel 12 dann justiergenau im Strahlengang des Laserstrahls LS angeordnet ist.

### BEZUGSZEICHENLISTE

- 10: Drehspiegelanordnung
- 12: Umlenkspiegel
- 14: Grundplatte
- 16: Rastplatte
- 18: Druckfeder
- 20: Noppen
- 22: Kegelbohrung
- 24: keilförmige Nut
- 26: kegelstumpfartige Bohrung
- 28: Drehzapfen
- 30: Durchgangsöffnung
- 32: Durchgangsöffnung
- 34: Leiterplatte
- 36: Drehknopf
- 38: Anschlag
- 40: Kontaktfeder
- 41: Ringstufe
- 42: Kontakte
- 44: Halteblech
- 46: Nieten
- 48: Fixierplatte
- 50: Wellenabschnitt
- 52: Zapfen
- 54: Durchgangsöffnung
- 56: Lagerzapfen
- 58: Gerade
- 60: Gerade
- A: Drehachse
- LS: Laserstrahl

## Patentansprüche

1. Drehspiegelanordnung (10) zur Fokussierung eines einfallenden Lichtstrahls und/oder zur Änderung der Fokuslage eines bereits fokussierten Lichtstrahls, insbesondere Laserstrahls (LS),
dadurch **gekennzeichnet,**
daß mehrere Umlenkspiegel (12) unterschiedlicher Brennweite auf einer Seite einer Grundplatte (14) befestigt sind, die an einer auf der gegenüberliegenden Seite angeordneten stationären Rastplatte (16) drehbar gelagert und in verschiedenen Drehstellungen mit dieser verrastbar ist, wobei in einer jeweiligen Raststellung ein betreffender Umlenkspiegel (12) in den Strahlengang des einfallenden Lichstrahls (LS) verschwenkt ist, daß die Grundplatte (14) in Richtung der Drehachse (A) verschiebbar an der Rastplatte (16) gelagert und durch Federkraft (18) gegen diese gehalten ist und daß die Grundplatte (14) durch ein Dreipunktauflager an der Rastplatte (16) abgestützt ist, das insbesondere drei an der Grundplatte (14) oder der Rastplatte (16) angeordnete, auf einem zur Drehachse (A) konzentrischen Kreis liegende kugelsegmentförmige Noppen (20) umfaßt, die mit einer Kegelbohrung (22), einer keilförmigen Nut (24) bzw. einem tiefer gelegenen Abschnitt (26) der Rastplatte (16) bzw. der Grundplatte (14) zusammenwirken, um die Grundplatte (14) in der jeweiligen Raststellung eindeutig bestimmt und reproduzierbar zu fixieren.

2. Drehspiegelanordnung nach Anspruch 1,
dadurch **gekennzeichnet,**
daß die Grundplatte (14) mit einem Drehzapfen (28) versehen ist, der sich durch eine Durchgangsöffnung (30) der Rastplatte (16) hindurcherstreckt und am freien Ende einen Anschlag (38) aufweist, der von einer Druckfeder (18) beaufschlagt ist, die zwischen diesem Anschlag (38) und der Rastplatte (16) angeordnet ist, wobei insbesondere die Druckfeder (18) auf den Drehzapfen (28) aufgesetzt ist und sich mit ihrem rastplattenseitigen Ende an einer Ringstufe (41) der gestuft ausgebildeten Durchgangsöffnung (30) der Rastplatte (16) abstützt.

3. Drehspiegelanordnung nach einem der vorhergehenden Ansprüche,
dadurch **gekennzeichnet,**
daß der Anschlag (38) durch einen am freien Ende des Drehzapfens (28) angeordneten, vorzugsweise lösbar an diesem befestigten Drehknopf (36) gebildet ist.

4. Drehspiegelanordnung nach einem der vorhergehenden Ansprüche,
dadurch **gekennzeichnet,**
daß die Rastplatte (16) auf ihrer von der Grundplatte (14) abgewandten Seite fest mit einer Leiterplatte (34) verbunden ist, die mit einer zur Durchgangsöffnung (30) der Rastplatte (16) koaxialen Durchgangsöffnung (32) für den Drehzapfen (28) der Grundplatte (14) versehen ist.

5. Drehspiegelanordnung nach einem der vorhergehenden Ansprüche,
dadurch **gekennzeichnet,**
daß im Bereich des freien Endes des Drehzapfens (28) bzw. des Drehknopfes (36) eine mit der Grundplatte (14) drehbare Kontaktfeder (40) angeordnet ist, die gegen die von der Rastplatte (16) abgewandte Seite der Leiterplatte (34) gehalten ist, um ein für die jeweilige Raststellung der Grundplatte (14) repräsentatives Signal abzugreifen.

6. Drehspiegelanordnung nach einem der vorhergehenden Ansprüche,
dadurch **gekennzeichnet,**
daß die Umlenkspiegel (12) für eine Justierung im Strahlengang des Lichtstrahles (LS) in ihrer Lage bezüglich der Grundplatte (14) verstellbar sind, wobei insbesondere die Umlenkspiegel (12) jeweils über ein biegbares Halteblech (44) aus vorzugsweise weichem Material wie insbesondere Aluminium an der Grundplatte (14) befestigt und in der jeweils eingestellten Lage durch eine abnehmbare Fixierplatte (48) festlegbar sind.

7. Drehspiegelanordnung nach einem der vorhergehenden Ansprüche,
dadurch **gekennzeichnet,**
daß die jeweils um 120 ° gegeneinander versetzten kugelsegmentförmigen Noppen (20) gleiche Abmessungen besitzen.

8. Drehspiegelanordnung nach einem der vorhergehenden Ansprüche,
dadurch **gekennzeichnet,**
daß die Kegelbohrung (22) und die keilförmige Nut (24) eine gleiche Tiefe besitzen und daß der Abschnitt (26) entsprechend tief gelegen ist, und/oder daß die Flanken der keilförmigen Nut (24) eine gleiche Steilheit aufweisen wie die Umfangswand der Kegelbohrung (22).

9. Drehspiegelanordnung nach einem der vorhergehenden Ansprüche,
dadurch **gekennzeichnet,**
daß der tiefer gelegene Abschnitt der Rastplatte durch den Boden einer kegelstumpfartigen oder zylindrischen Bohrung (26) gebildet ist, deren Eintrittsquerschnitt größer als der der Kegelbohrung (22) ist, wobei insbesondere die Umfangswand der kegelstupfartigen Bohrung (22) eine gleiche Steilheit besitzt wie die Flanken der keilförmigen Nut (24) bzw. die Umfangswand der Kegelbohrung (22).

10. Drehspiegelanordnung nach einem der vorhergehenden Ansprüche,
dadurch **gekennzeichnet,**
daß sich die keilförmige Nut (24) entlang einer zur Ebene der Rastplatte parallelen Geraden (58) erstreckt, die durch den Mittelpunkt des Eintrittsquerschnitts der Kegelbohrung (22) verläuft und im rechten Winkel eine weitere zur Ebene der Rastplatte (16) parallele Gerade (60) schneidet, die durch den Mittelpunkt des Eintrittsquerschnitts der kegelstupfartigen Bohrung (22) verläuft und die Drehachse (A) schneidet.
